# EUROPÄISCHE PATENTSCHRIFT

(11) **EP 3 463 975 B1**
(45) Veröffentlichungstag und Bekanntmachung des Hinweises auf die Patenterteilung: **15.07.2020**
(21) Anmeldenummer: 17705882.3
(22) Anmeldetag: 17.02.2017
(51) Int. Cl.: B60P 1/00

(54) **ABSCHIEBEVORRICHTUNG UND ABSCHIEBEWAGEN MIT EINER ABSCHIEBEVORRICHTUNG**
PUSH-OFF DEVICE AND PUSH-OFF TRAILER HAVING A PUSH-OFF DEVICE
DISPOSITIF DE POUSSÉE ET VÉHICULE DE POUSSÉE ÉQUIPÉ D'UN DISPOSITIF DE POUSSÉE

(30) Priorität: 01.06.2016 DE 102016110138
(43) Veröffentlichungstag der Anmeldung: 10.04.2019
(73) Patentinhaber: Fliegl Agrartechnik GmbH, 84453 Mühldorf (DE)
(72) Erfinder: FLIEGL, Josef, Sen., 84556 Kastl (DE)
(74) Vertreter: Nußbaum, Christopher
(86) Internationale Anmeldenummer: PCT/EP2017/053635
(87) Internationale Veröffentlichungsnummer: WO 2017/207120

(56) Entgegenhaltungen:
- BR-A2-102015 017 218
- FR-A1- 2 862 294
- GB-A- 2 036 687
- JP-A- S58 183 324

## Beschreibung

Die Erfindung betrifft eine Abschiebevorrichtung der im Oberbegriff des Patentanspruchs 1 angegebenen Art. Des Weiteren betrifft die Erfindung noch einen Abschiebewagen mit einer Abschiebevorrichtung.

Die EP 1 609 668 A2 zeigt einen als Abschiebewagen ausgebildeten Anhänger mit einer Abschiebevorrichtung. Die Abschiebevorrichtung dient insbesondere zum Aufnehmen und zum Entladen von landwirtschaftlichem Transportgut. Die Abschiebevorrichtung umfasst einen Laderaum, welcher einen Ladeboden, zwei seitlich daran angrenzende Seitenwände und eine Abschiebwand aufweist. Die Abschiebewand ist dabei in Längsrichtung des Laderaums relativ zu einem Schiebeboden verschiebbar, der seinerseits in Längsrichtung des Laderaums relativ zum Ladeboden des Laderaums verschiebbar ist. Die Abschiebewand kann dabei mittels einer Gewindespindel relativ zum Schiebeboden verschoben werden, wobei der Schiebeboden wiederum mittels einer Zylinderkolbenanordnung relativ zum Ladeboden des Laderaums verschiebbar ist. Die Relativbeweglichkeit der Abschiebewand zum seinerseits verschiebbaren Schiebeboden wird dadurch ermöglicht, dass die Abschiebewand mittels Gleitelementen an einem Führungsprofil schlittenartig gelagert ist, welches die Gewindespindel umgibt.

Die GB 2 036 687 A1 zeigt einen als Anhänger ausgebildeten Miststreuer mit einer verschiebbaren Abschiebewand, die mittels eines Hydraulikzylinders verschoben werden kann. Mittels eines zweiten Hydraulikzylinders kann ein Schiebeboden verschoben werden. Oberhalb vom zweiten Hydraulikzylinder ist eine Abdeckung angeordnet. Die Abschiebewand ist über Pads verschiebbar auf dem Schiebeboden gelagert. Dieses Dokument wird als nächstliegender Stand der Technik gegenüber dem Gegenstand des Anspruchs 1 angesehen.

Es ist die Aufgabe der vorliegenden Erfindung, eine Abschiebevorrichtung der eingangs genannten Art bereitzustellen, welche einen besonders einfachen Aufbau aufweist.

Diese Aufgabe wird durch eine Abschiebevorrichtung mit den Merkmalen des Patentanspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Abschiebevorrichtung, insbesondere für landwirtschaftliches Transportgut, umfasst einen Laderaum, welcher einen Ladeboden, zwei seitlich daran angrenzende Seitenwände und eine Abschiebwand aufweist. Die Abschiebewand ist dabei in Längsrichtung des Laderaums relativ zu einem Schiebeboden verschiebbar, der seinerseits in Längsrichtung des Laderaums relativ zum Ladeboden des Laderaums verschiebbar ist. Um einen besonders einfachen Aufbau der Abschiebevorrichtung zu realisieren, ist es erfindungsgemäß vorgesehen, dass die Abschiebevorrichtung eine erste Hydraulikzylinderanordnung aufweist, welche zumindest einen in einem ersten Hydraulikzylinderrohr bewegbaren ersten Hydraulikzylinderkolben umfasst. Ferner ist es erfindungsgemäß vorgesehen, dass die Abschiebevorrichtung eine zweite Hydraulikzylinderanordnung aufweist, welche zumindest einen in einem zweiten Hydraulikzylinderrohr beweglichen zweiten Hydraulikzylinderkolben umfasst. Es ist auch möglich, dass die erste und/oder die zweite Hydraulikzylinderanordnung mehrere Hydraulikzylinderrohre und Hydraulikzylinderkolben aufweist. Bei der ersten Hydraulikzylinderanordnung und/oder bei der zweiten Hydraulikzylinderanordnung kann es sich also auch um ein Zylinderpaket handeln. Die Abschiebewand ist erfindungsgemäß in Längsrichtung des Laderaums verschiebbar am zweiten Hydraulikzylinderrohr gelagert und mittels der ersten Hydraulikzylinderanordnung relativ zum Schiebeboden verschiebbar, der mittels der zweiten Hydraulikzylinderanordnung relativ zum Ladeboden des Laderaums verschiebbar ist. Vorzugsweise sind die Hydraulikzylinderrohre und die Hydraulikzylinderkolben parallel zum Ladeboden ausgerichtet, wobei die Haupterstreckungsrichtung der Hydraulikzylinderrohre und der Hydraulikzylinderkolben in Längsrichtung der Abschiebevorrichtung und somit auch in Längsrichtung des Laderaums verläuft.

Mittels der beiden Hydraulikzylinderanordnungen ist es also möglich, die Abschiebwand zwischen einer eingefahrenen Beladeposition und einer ausgefahrenen Entladeposition hin und her zu verschieben. Die eingefahrene Beladeposition wird eingenommen, wenn beide Hydraulikzylinderkolben vollständig eingefahren worden sind, wobei die ausgefahrene Entladeposition eingenommen wird, wenn beide Hydraulikzylinderkolben vollständig ausgefahren worden sind. Vorzugsweise befindet sich die Abschiebewand in der ausgefahrenen Entladeposition im Bereich einer Vorderkante des Ladebodens des Laderaums, sodass im Laderaum aufgenommenes Transportgut mittels der Abschiebewand vom Ladeboden heruntergeschoben werden kann. In der eingefahrenen Beladeposition befindet sich hingegen die Abschiebewand vorzugsweise gegenüberliegend von der Vorderkante des Ladebodens im Bereich einer Hinterkante des Ladebodens, sodass in der Beladeposition der größtmöglich bereitstellbare Laderaum durch eine entsprechende Positionierung der Abschiebewand bereitgestellt wird.

Um einen besonders einfachen Aufbau bei der Abschiebevorrichtung zu realisieren, ist es vorgesehen, dass das zweite Hydraulikzylinderrohr als Linearführung für die translatorische Bewegung der Abschiebewand dient. Im Gegensatz zu der in der EP 1 609 668 A2 gezeigten Abschiebevorrichtung ist also kein separates Führungsprofil mehr notwendig, um die translatorische Relativbewegung der Abschiebewand gegenüber dem seinerseits verschiebbaren Schiebeboden zu realisieren. Da zusätzliche Führungsprofile bzw. Führungsschienen aufgrund der Linearführungsfunktion des zweiten Hydraulikzylinders eingespart werden können, kann entsprechend viel Gewicht bei der Abschiebevorrichtung eingespart werden. Aufgrund der verringerten Teileanzahl gestaltet sich auch der Fertigungsaufwand bei der erfindungsgemäßen Abschiebevorrichtung wesentlich günstiger als beim eingangs zitierten Stand der Technik. Darüber hinaus werden auch weniger bewegliche Hydraulikschläuche benötigt, wobei letztlich auch noch die Abschiebevorrichtung insgesamt optisch ansprechender gestaltet werden kann. Vorzugsweise ist die erste Hydraulikzylinderanordnung in Hochrichtung der Abschiebevorrichtung oberhalb von der zweiten Hydraulikzylinderanordnung angeordnet.

Eine vorteilhafte Ausführungsform der Erfindung sieht vor, dass das erste Hydraulikzylinderrohr am zweiten Hydraulikzylinderrohr und der erste Hydraulikzylinderkolben an der Abschiebewand befestigt ist. Vorzugsweise dient also das zweite Hydraulikzylinderrohr nicht nur als Linearführung für die translatorische Bewegung der Abschiebewand sondern zusätzlich auch noch zur Befestigung des ersten Hydraulikzylinderrohrs. Aufgrund dieser zusätzlichen Funktionsintegration im Hinblick auf das zweite Hydraulikzylinderrohr können nochmals Teile und somit auch Gewicht bei der Abschiebevorrichtung eingespart werden. Die erste Hydraulikzylinderanordnung stützt sich also vorzugsweise am zweiten Hydraulikzylinderrohr ab und kann somit durch Aus- und Einfahren des ersten Hydraulikzylinderkolbens die Abschiebewand relativ zum Abschiebeboden bewegen.

Eine weitere vorteilhafte Ausführungsform der Erfindung sieht vor, dass der zweite Hydraulikzylinderkolben am Ladeboden des Laderaums und das zweite Hydraulikzylinderrohr am Schiebeboden befestigt ist. Die zweite Hydraulikzylinderanordnung stützt sich also am unbeweglichen Ladeboden ab und kann somit durch Aus- und Einfahren des zweiten Hydraulikzylinderkolbens den Abschiebeboden relativ zum Ladeboden bewegen. Da der zweite Hydraulikzylinderkolben am unbeweglichen Ladeboden befestigt ist, bewegt sich also bei der zweiten Hydraulikzylinderanordnung das zweite Hydraulikzylinderrohr relativ zum Ladeboden, wenn der zweite Hydraulikzylinderkolben aus- bzw. eingefahren wird. Beim Bewegen des Schiebebodens wird dann also zwangsläufig auch die Abschiebewand relativ zum Ladeboden und den Seitenwänden bewegt. Um eine besonders einfache Ansteuerung der beiden Hydraulikzylinderanordnungen zu realisieren, kann es dabei vorgesehen sein, dass diese gleichzeitig aus demselben Kreislauf mit einem Hydraulikmedium druckbeaufschlagt werden. Je nach auftretenden Bewegungswiderständen im Hinblick auf die Verschiebung der Abschiebewand und des Schiebebodens werden dann die jeweiligen Hydraulikzylinderkolben unter Umständen unterschiedlich schnell ausgefahren und eingefahren bis diese ihre jeweiligen Endlagen erreicht haben.

In weiterer vorteilhafter Ausgestaltung der Erfindung ist es vorgesehen, dass stirnseitig an einem geschlossenen Ende des zweiten Hydraulikzylinderrohrs ein sich in radialer Richtung erstreckendes Lagerelement angebracht ist, unter dessen Vermittlung das zweite Hydraulikzylinderrohr am Schiebeboden befestigt ist. Beispielsweise kann das Lagerelement sowohl am zweiten Hydraulikzylinderrohr als auch am Schiebeboden angeschweißt sein. Andere Befestigungsmöglichkeiten des zweiten Hydraulikrohrs an dem Schiebeboden sind aber ebenfalls möglich.

In weiterer vorteilhafter Ausgestaltung der Erfindung ist es vorgesehen, dass stirnseitig an einem freien Ende des zweiten Hydraulikzylinderkolbens ein sich in radialer Richtung erstreckendes Lagerelement angebracht ist, unter dessen Vermittlung der zweite Hydraulikzylinderkolben am Ladeboden des Laderaums befestigt ist. Das Lagerelement kann beispielsweise am Ladeboden und am freien Ende des zweiten Hydraulikzylinderkolbens angeschweißt oder auch anderweitig befestigt sein. In jedem Fall wird der zweite Hydraulikzylinderkolben vorzugsweise parallel zum Ladeboden ausgerichtet und entsprechend beabstandet, sodass der der zweite Hydraulikzylinderkolben beim Einfahren und Ausfahren nicht den Ladeboden berührt.

Gemäß einer weiteren vorteilhaften Ausführungsform der Erfindung ist es vorgesehen, dass der erste Hydraulikzylinderkolben und der zweite Hydraulikzylinderkolben gegenläufig zueinander ausfahrbar angeordnet sind. Vorzugsweise weist der zweite Hydraulikzylinderkolben eine in axialer Richtung verlaufende Innenbohrung zur Versorgung der zweiten Hydraulikzylinderanordnung mit einer Hydraulikflüssigkeit auf. Durch die gegenläufige Ausfahrbarkeit der beiden Hydraulikzylinderkolben wird auf einfache Weise ermöglicht, das zweite Hydraulikzylinderrohr am ersten Hydraulikzylinderrohr zu befestigen und das zweite Hydraulikzylinderrohr als Linearführung für die Abschiebewand zu verwenden.

Eine weitere vorteilhafte Ausführungsform der Erfindung sieht vor, dass das erste Hydraulikzylinderrohr und das zweite Hydraulikzylinderrohr an jeweiligen Längsenden aneinander befestigt sind, aus welchen jeweilige Hydraulikzylinderkolben ausfahrbar sind. Dies ist insbesondere dann sinnvoll, wenn die beiden Hydraulikzylinderkolben gegenläufig ausfahrbar angeordnet sind, da bei dieser Anordnung der maximale Hub durch Ein- und Ausfahren der jeweiligen Hydraulikzylinderkolben erzielt werden kann.

In weiterer vorteilhafter Ausgestaltung der Erfindung ist es vorgesehen, dass die Abschiebewand mittels wenigstens einem Gleitelement, welches das zweite Hydraulikzylinderrohr zumindest teilweise außenumfangsseitig umschließt, am zweiten Hydraulikzylinderrohr gelagert ist. Vorzugsweise ist die Abschiebewand mittels eines weiteren Gleitelements, welches das zweite Hydraulikzylinderrohr ebenfalls zumindest teilweise außenumfangsseitig umschließt und vom anderen Gleitelement in axialer Richtung beabstandet ist, am zweiten Hydraulikzylinderrohr gelagert. Die beiden Gleitelemente dienen also als eine Art Schlitten, mittels welchem die Abschiebewand verschiebbar am zweiten Hydraulikzylinderrohr beweglich gelagert ist. Beispielsweise kann das zweite Hydraulikzylinderrohr dabei in radialer Richtung soweit von dem Schiebeboden entfernt angeordnet sein, dass die beiden Gleitelemente das zweite Hydraulikzylinderrohr vollständig umschließen können. In einem derartigen Fall kann eine besonders stabile Gleitlagerung der Abschiebewand am zweiten Hydraulikzylinderrohr realisiert werden.

Der erfindungsgemäße Abschiebewagen umfasst die erfindungsgemäße Abschiebevorrichtung oder eine vorteilhafte Ausführungsform der erfindungsgemäßen Abschiebevorrichtung. Bei dem Abschiebewagen kann es sich beispielsweise um einen Anhänger handeln, welcher von einem Zugfahrzeug, wie beispielsweise einem Traktor oder auch von einem LKW gezogen werden kann. Alternativ ist es aber auch möglich, dass die Abschiebevorrichtung als Teil eines Containers, wie beispielsweise eines Isocontainers oder dergleichen realisiert wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der angegebenen Kombination sondern auch in Alleinstellung verwendbar, ohne den Rahmen der Erfindung zu verlassen.

Die Zeichnung zeigt in:
- Fig. 1: eine teiltransparente schematische Seitenansicht eines als Anhänger ausgebildeten Abschiebewagens mit einer Abschiebevorrichtung, welche einen Laderaum aufweist, der einen Ladeboden, zwei seitlich daran angrenzende Seitenwände und eine Abschiebewand umfasst, welche in Längsrichtung des Laderaums relativ zu einem Schiebeboden verschiebbar ist, der seinerseits in Längsrichtung des Laderaums relativ zum Ladeboden des Laderaums verschiebbar ist;
- Fig. 2: eine Perspektivansicht der Abschiebevorrichtung, wobei die Abschiebewand an drei verschiedenen Positionen angeordnet dargestellt ist;
- Fig. 3: eine teiltransparente Seitenansicht der Abschiebevorrichtung, wobei die Abschiebewand in einer vollständig eingefahrenen Beladeposition angeordnet ist;
- Fig. 4: eine teiltransparente Seitenansicht der Abschiebevorrichtung, wobei die Abschiebewand in einer ausgefahrenen Entladeposition angeordnet ist, in welcher sich die Abschiebewand an einer Vorderkante des Ladebodens des Laderaums befindet;
- Fig. 5: eine teilweise geschnittene Detailansicht der Lagerung der Abschiebewand; und in
- Fig. 6: eine teilweise geschnittene Frontalansicht, in welcher erneut die Lagerung der Abschiebewand schematisch dargestellt ist.

In den Figuren werden gleiche oder funktionsgleiche Elemente mit gleichen Bezugszeichen versehen.

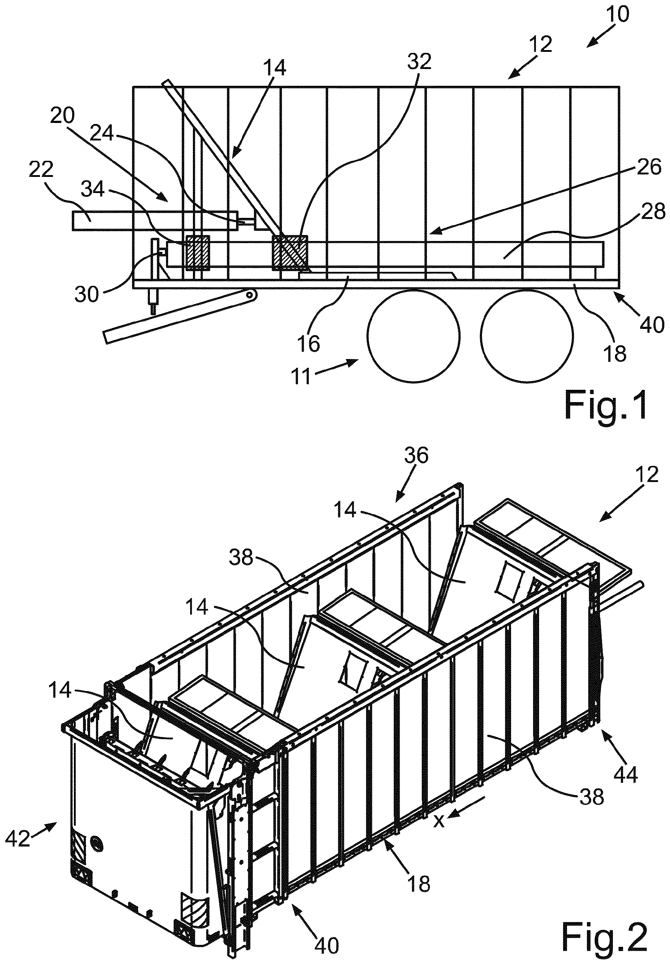

Ein als Anhänger ausgebildeter Abschiebewagen 10 ist in einer schematischen teiltransparenten Seitenansicht in Fig. 1 gezeigt. Der Abschiebewagen 10 umfasst ein hier nur schematisch angedeutetes Fahrwerk 11, an bzw. auf welchem eine Abschiebevorrichtung 12 aufgenommen ist. Die Abschiebevorrichtung 12 umfasst eine Abschiebewand 14, welche relativ zu einem Schiebeboden 16 verschiebbar ist, der seinerseits relativ zu einem Ladeboden 18 verschiebbar ist. Zum Verschieben der Abschiebewand 14 umfasst die Abschiebevorrichtung 12 eine erste Hydraulikzylinderanordnung 20, welche einen in einem ersten Hydraulikzylinderrohr 22 beweglichen ersten Hydraulikzylinderkolben 24 aufweist. Zum Verschieben des Schiebebodens 16 umfasst die Abschiebevorrichtung 12 darüber hinaus noch eine zweite Hydraulikzylinderanordnung 26, welche einen in einem zweiten Hydraulikzylinderrohr 28 beweglichen zweiten Hydraulikzylinderkolben 30 umfasst. Die Abschiebewand 14 ist dabei mittels zweier Gleitelemente 32, 34 am zweiten Hydraulikzylinderrohr 28 gelagert.

In Fig. 2 ist die Abschiebevorrichtung 12 ohne das Fahrwerk 11 in einer Perspektivansicht dargestellt. Die Abschiebwand 14 ist dabei in drei verschiedenen Positionen dargestellt, entgegen der vorliegenden Darstellung weist die Abschiebvorrichtung 12 also natürlich nur eine einzige Abschiebewand 14 auf. Die Abschiebevorrichtung 12 umfasst des Weiteren einen hier gut erkennbaren Laderaum 36, welcher durch den Ladeboden 18, zwei seitlich daran angrenzende Seitenwände 38 und die verschiebbare Abschiebewand 14 gebildet wird. Im Bereich einer Vorderkante 40 des Ladebodens 18 kann der Laderaum 36 zudem durch eine verschwenkbare Klappe 42 verschlossen werden.

Wie vorliegend zu erkennen, kann die Abschiebewand 14 also in Längsrichtung x des Laderaums 36 verschoben werden. Die Abschiebewand 14 kann dabei bis zu einer Entladeposition so weit nach vorne verschoben werden, bis die Abschiebewand 14 im Bereich der Vorderkante 40 des Ladebodens 18 angelangt ist. Dadurch kann mittels der Abschiebevorrichtung 12 im Laderaum 36 aufgenommenes Transportgut, beispielsweise landwirtschaftliches Schüttgut oder dergleichen, auf besonders einfache Weise vom Ladeboden 18 hinunterbefördert werden. Des Weiteren kann die Abschiebewand 14 auch so weit nach hinten verschoben werden, bis sich die Abschiebewand 14 im Bereich einer Hinterkante 44 des Ladebodens 18 befindet.

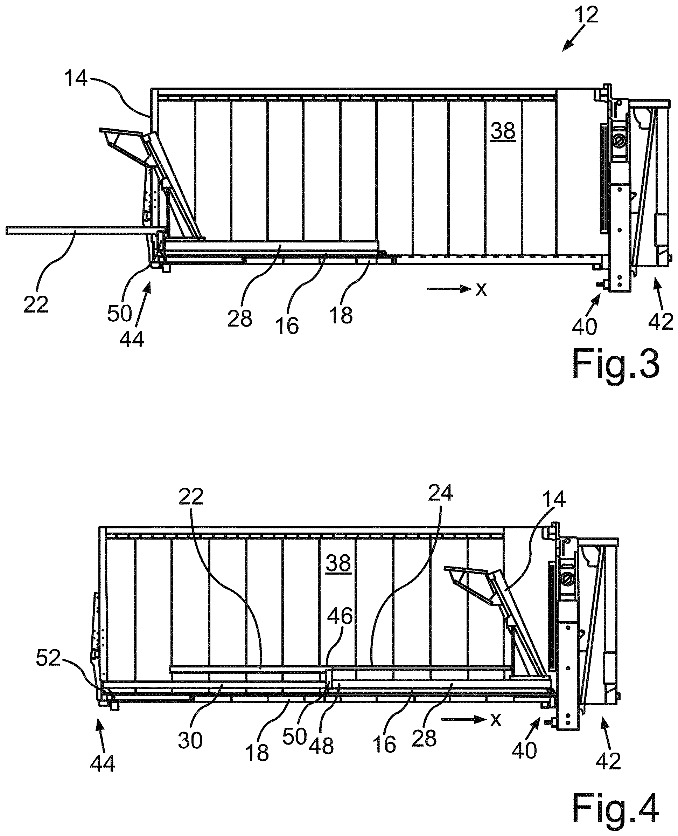

In Fig. 3 ist die Abschiebevorrichtung 12 in einer teiltransparenten Seitenansicht gezeigt, wobei die Abschiebewand 14 in ihrer Beladeposition angeordnet ist, sodass der Laderaum 36 maximiert ist. In dieser Positionierung der Abschiebewand 14 sind die beiden Hydraulikzylinderkolben 24, 30 vollständig in die jeweiligen Hydraulikzylinderrohre 22, 28 eingefahren, was auch der Grund dafür ist, dass in der vorliegenden Darstellung die Hydraulikzylinderkolben 24, 30 nicht sichtbar sind.

In Fig. 4 ist die Abschiebewand 14 in ihrer Entladeposition gezeigt, in welcher die Abschiebewand 14 bis an die Vorderkante 40 des Ladebodens 18 bewegt worden ist. In dieser Stellung bzw. Positionierung der Abschiebewand 14 sind die beiden Hydraulikzylinderkolben 24, 30 vollständig ausgefahren. Der maximale Verfahrweg der Abschiebewand 14 ergibt sich also durch Addition der jeweiligen Hübe der Hydraulikzylinderanordnungen 20, 26.

Wie zu erkennen, ist das erste Hydraulikzylinderrohr 22 am zweiten Hydraulikzylinderrohr 28 befestigt. Das erste Hydraulikzylinderrohr 22 und das zweite Hydraulikzylinderrohr 28 sind dabei an jeweiligen Längsenden 46, 48 aneinander befestigt, aus welchen die jeweiligen Hydraulikzylinderkolben 24, 30 ausfahrbar sind. Wie zu erkennen sind dabei der erste Hydraulikzylinderkolben 24 und der zweite Hydraulikzylinderkolben 30 gegenläufig zueinander ausfahrbar angeordnet. Um die Ausfahr- und Einfahrbewegung der jeweiligen Hydraulikzylinderkolben 24, 30 nicht zu beeinträchtigen, sind die beiden Hydraulikzylinderrohre 22, 28 unter Vermittlung eines radialen Abstandshalters 50 aneinander befestigt. Dadurch sind die Hydraulikzylinderkolben 24, 30 in radialer Richtung, oder anders ausgedrückt in Hochrichtung der Abschiebevorrichtung 12, soweit von den jeweiligen Hydraulikzylinderrohren 22, 28 beabstandet, dass die Hydraulikzylinderkolben 24, 30 kollisionsfrei aus- und eingefahren werden können.

Der erste Hydraulikzylinderkolben 24 ist wiederum an der Abschiebewand 14 befestigt. Die erste Hydraulikzylinderanordnung 20 stützt sich also am zweiten Hydraulikzylinderrohr 28 ab, und kann somit durch Aus- und Einfahren des ersten Hydraulikzylinderkolbens 24 die Abschiebewand 14 relativ zum Abschiebeboden 16 bewegen. Der zweite Hydraulikzylinderkolben 30 ist am unbeweglichen Ladeboden 18 befestigt, wobei das zweite Hydraulikzylinderrohr 28 am Schiebeboden 16 befestigt ist. Der zweite Hydraulikzylinderkolben 30 ist also zum Laderaum 36 bzw. zum unbeweglichen Ladeboden 18 nicht relativbeweglich. Stattdessen kann durch eine entsprechende Beaufschlagung mit einem Hydraulikmedium das zweite Hydraulikzylinderrohr 28 relativ zum unbeweglichen Ladeboden 18 des Laderaums 36 bewegt werden und dadurch den beweglichen Schiebeboden 16 relativ zum Ladeboden 18 bewegen. Da die Abschiebewand 14 am zweiten Hydraulikzylinderrohr 28 gelagert ist, wird die Abschiebewand 14 automatisch in Längsrichtung x des Laderaums 36 mitbewegt, sobald der zweite Hydraulikzylinderkolben 30 aus- bzw. eingefahren wird, in Folge dessen das zweite Hydraulikzylinderrohr 28 in Längsrichtung x bewegt wird.

Stirnseitig an einem freien Ende des zweiten Hydraulikzylinderkolbens 30 ist ein sich in radialer Richtung von diesem erstreckendes Lagerelement 52 angebracht, unter dessen Vermittlung der zweite Hydraulikzylinderkolben 30 am Ladeboden 18 des Laderaums 36 befestigt ist. Das Lagerelement 52 trägt dazu bei, dass der zweite Hydraulikzylinderkolben 30 den Ladeboden 18 nicht berührt und somit kollisionsfrei ein- und ausgefahren werden kann.

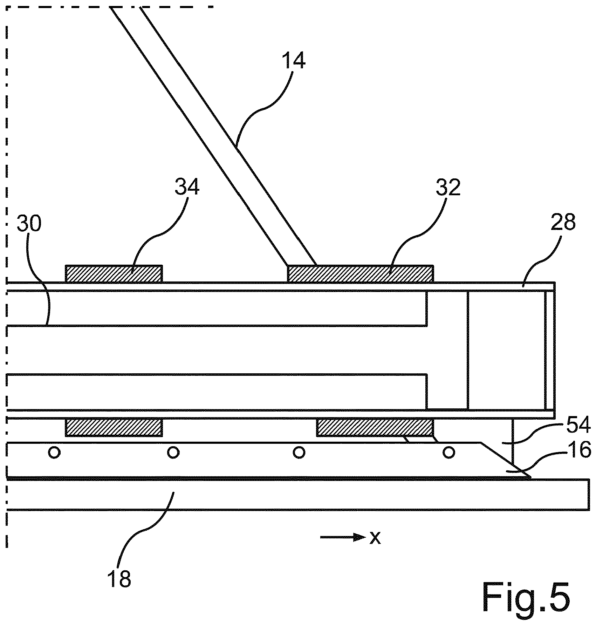

In Fig. 5 ist die Lagerung der Abschiebewand 14 am zweiten Hydraulikzylinderrohr 28 in einer schematischen Seitenschnittansicht dargestellt. Hier sind nochmals gut die beiden Gleitelemente 32, 34 zu erkennen, welche das zweite Hydraulikzylinderrohr 28 zumindest teilweise außenumfangsseitig umschließen. Die beiden Gleitelemente 32, 34 sind dabei in axialer Richtung, also in Längsrichtung x, etwas voneinander beabstandet angeordnet, sodass die Abschiebewand 14 stabil gelagert ist und etwaige Kippmomente aufgrund der exzentrischen Kraftbeaufschlagung der Abschiebewand 14 aufgefangen werden können.

Stirnseitig an einem geschlossenen Ende des zweiten Hydraulikzylinderrohrs 28 ist ein sich in radialer Richtung erstreckendes Lagerelement 54 angebracht, unter dessen Vermittlung das zweite Hydraulikzylinderrohr 28 am Schiebeboden 16 befestigt ist. Durch das Lagerelement 54 kann das zweite Hydraulikzylinderrohr 28 so weit von dem Schiebeboden 16 beabstandet angeordnet werden, dass die Gleitelemente 32, 34 relativ entlang des zweiten Hydraulikzylinderrohrs 28 bewegt werden können ohne den Schiebeboden 16 zu berühren.

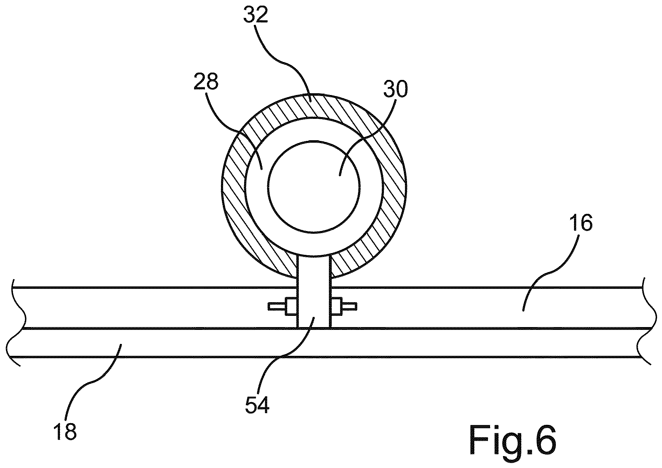

In Fig. 6 ist die Lagerung der Abschiebewand 14 in einer teilweise geschnittenen Frontalansicht nochmals schematisch dargestellt. In der vorliegenden Darstellung ist nochmals gut die konzentrische Anordnung des Gleitelements 32, des zweiten Hydraulikzylinderrohrs 28 und des zweiten Hydraulikzylinderkolbens 30 zu erkennen. Das Lagerelement 54 kann beispielsweise sowohl am zweiten Hydraulikzylinderrohr 28 als auch am Schiebeboden 16 angeschweißt sein. Es können aber auch andere Befestigungsmöglichkeiten, wie beispielsweise Verschraubungen oder dergleichen eingesetzt werden, um das zweite Hydraulikzylinderrohr 28 mit dem Schiebeboden 16 zu verbinden.

### BEZUGSZEICHENLISTE:

- 10: Abschiebewagen
- 11: Fahrwerk
- 12: Abschiebevorrichtung
- 14: Abschiebewand
- 16: Schiebeboden
- 18: Ladeboden
- 20: erste Hydraulikzylinderanordnung
- 22: erstes Hydraulikzylinderrohr
- 24: erster Hydraulikzylinderkolben
- 26: zweite Hydraulikzylinderanordnung
- 28: zweites Hydraulikzylinderrohr
- 30: zweiter Hydraulikzylinderkolben
- 32: Gleitelement
- 34: Gleitelement
- 36: Laderaum
- 38: Seitenwand
- 40: Vorderkante
- 42: verschwenkbare Klappe
- 44: Hinterkante
- 46: Längsende
- 48: Längsende
- 50: Abstandshalter
- 52: Lagerelement
- 54: Lagerelement
- x: Längsrichtung

## Patentansprüche

1. Abschiebevorrichtung (12), insbesondere für landwirtschaftliches Transportgut, umfassend einen Laderaum (36), welcher einen Ladeboden (18), zwei seitlich daran angrenzende Seitenwände (38) und eine Abschiebewand (14) aufweist, welche in Längsrichtung (x) des Laderaums (36) relativ zu einem Schiebeboden (16) verschiebbar ist, der seinerseits in Längsrichtung (x) des Laderaums (36) relativ zum Ladeboden (18) des Laderaums (36) verschiebbar ist; wobei
- die Abschiebevorrichtung (12) eine erste Hydraulikzylinderanordnung (20) aufweist, welche zumindest einen in einem ersten Hydraulikzylinderohr (22) beweglichen ersten Hydraulikzylinderkolben (24) umfasst;
- die Abschiebevorrichtung (12) eine zweite Hydraulikzylinderanordnung (26) aufweist, welche zumindest einen in einem zweiten Hydraulikzylinderohr (28) beweglichen zweiten Hydraulikzylinderkolben (30) umfasst;
**dadurch gekennzeichnet, dass**
- die Abschiebewand (14) in Längsrichtung (x) des Laderaums (36) verschiebbar am zweiten Hydraulikzylinderohr (28) gelagert und mittels der ersten Hydraulikzylinderanordnung (20) relativ zum Schiebeboden (16) verschiebbar ist, der mittels der zweiten Hydraulikzylinderanordnung (26) relativ zum Ladeboden (18) des Laderaums (36) verschiebbar ist.

2. Abschiebevorrichtung (12) nach Anspruch 1,
**dadurch gekennzeichnet, dass**
das erste Hydraulikzylinderohr (22) am zweiten Hydraulikzylinderohr (28) und der erste Hydraulikzylinderkolben (24) an der Abschiebewand (14) befestigt ist.

3. Abschiebevorrichtung (12) nach Anspruch 1 oder 2,
**dadurch gekennzeichnet, dass**
der zweite Hydraulikzylinderkolben (30) am Ladeboden (18) des Laderaums (36) und das zweite Hydraulikzylinderohr (28) am Schiebeboden (16) befestigt ist.

4. Abschiebevorrichtung (12) nach Anspruch 3,
**dadurch gekennzeichnet, dass**
stirnseitig an einem geschlossenen Ende des zweiten Hydraulikzylinderohrs (28) ein sich in radialer Richtung erstreckendes Lagerelement (54) angebracht ist, unter dessen Vermittlung das zweite Hydraulikzylinderohr (28) am Schiebeboden (16) befestigt ist.

5. Abschiebevorrichtung (12) nach Anspruch 3 oder 4,
**dadurch gekennzeichnet, dass**
stirnseitig an einem freien Ende des zweiten Hydraulikzylinderkolbens (30) ein sich in radialer Richtung erstreckendes Lagerelement (52) angebracht ist, unter dessen Vermittlung der zweite Hydraulikzylinderkolben (30) am Ladeboden (18) des Laderaums (36) befestigt ist.

6. Abschiebevorrichtung (12) nach einem der vorhergehenden Ansprüche,
**dadurch gekennzeichnet, dass**
der erste Hydraulikzylinderkolben (24) und der zweite Hydraulikzylinderkolben (30) gegenläufig zueinander ausfahrbar angeordnet sind.

7. Abschiebevorrichtung (12) nach einem der vorhergehenden Ansprüche,
**dadurch gekennzeichnet, dass**
das erste Hydraulikzylinderohr (22) und das zweite Hydraulikzylinderohr (28) an jeweiligen Längsenden (46, 48) aneinander befestigt sind, aus welchen die jeweiligen Hydraulikzylinderkolben (24, 30) ausfahrbar sind.

8. Abschiebevorrichtung (12) nach einem der vorhergehenden Ansprüche,
**dadurch gekennzeichnet, dass**
die Abschiebewand (14) mittels wenigstens einem Gleitelement (32), welches das zweite Hydraulikzylinderohr (28) zumindest teilweise außenumfangsseitig umschließt, am zweiten Hydraulikzylinderohr (28) gelagert ist.

9. Abschiebevorrichtung (12) nach Anspruch 8,
**dadurch gekennzeichnet, dass**
die Abschiebewand (14) mittels eines weiteren Gleitelements (34), welches das zweite Hydraulikzylinderohr (28) zumindest teilweise außenumfangsseitig umschließt und vom anderen Gleitelement (32) in axialer Richtung beabstandet ist, am zweiten Hydraulikzylinderohr (28) gelagert ist.

10. Abschiebewagen (10) mit einer Abschiebevorrichtung (12) nach einem der vorhergehenden Ansprüche.

## Claims

1. Push-off device (12), in particular for agricultural transport goods, comprising a loading space (36) having a loading floor (18), two side walls (38) laterally adjacent thereto and a push-off wall (14), which is slidable in the longitudinal direction (x) of the loading space (36) relative to a sliding floor (16), which in turn is slidable in the longitudinal direction (x) of the loading space (36) relative to the loading floor (18) of the loading space (36), wherein
- the push-off device (12) has a first hydraulic cylinder arrangement (20) comprising at least one first hydraulic cylinder piston (24) that is movable in a first hydraulic cylinder tube (22),
- the push-off device (12) has a second hydraulic cylinder arrangement (26) comprising at least one second hydraulic cylinder piston (30) that is movable in a second hydraulic cylinder tube (28), **characterised in that**
- the push-off wall (14) is slidably mounted on the second hydraulic cylinder tube (28) in the longitudinal direction (x) of the loading space (36) and is slidable by means of the first hydraulic cylinder arrangement (20) relative to the sliding floor (16), which is slidable by means of the second hydraulic cylinder arrangement (26) relative to the loading floor (18) of the loading space (36).

2. Push-off device (12) according to claim 1,
**characterised in that**
the first hydraulic cylinder tube (22) is attached to the second hydraulic cylinder tube (28) and the first hydraulic cylinder piston (24) is attached to the push-off wall (14).

3. Push-off device (12) according to claim 1 or 2,
**characterised in that**
the second hydraulic cylinder piston (30) is attached to the loading floor (18) of the loading space (36) and the second hydraulic cylinder tube (28) is attached to the sliding floor (16).

4. Push-off device (12) according to claim 3,
**characterised in that**
a bearing element (54) extending in a radial direction is mounted on the face of a closed end of the second hydraulic cylinder tube (28), by means of which the second hydraulic cylinder tube (28) is attached to the sliding floor (16).

5. Push-off device (12) according to claim 3 or 4,
**characterised in that**
a bearing element (52) extending in a radial direction is mounted on the face of a free end of the second hydraulic cylinder piston (30), by means of which the second hydraulic cylinder piston (30) is attached to the loading floor (18) of the loading space (36).

6. Push-off device (12) according to any of the preceding claims,
**characterised in that**
the first hydraulic cylinder piston (24) and the second hydraulic cylinder piston (30) are arranged to extend in the opposite direction to each other.

7. Push-off device (12) according to any of the preceding claims,
**characterised in that**
the first hydraulic cylinder tube (22) and the second hydraulic cylinder tube (28) are attached to each other at their longitudinal ends (46, 48), from which the respective hydraulic cylinder pistons (24, 30) can be extended.

8. Push-off device (12) according to any of the preceding claims,
**characterised in that**
the push-off wall (14) is mounted on the second hydraulic cylinder tube (28) by means of at least one sliding element (32), which at least partially surrounds the outer circumference of the second hydraulic cylinder tube (28).

9. Push-off device (12) according to claim 8,
**characterised in that**
the push-off wall (14) is mounted on the second hydraulic cylinder tube (28) by means of a further sliding element (34), which at least partially surrounds the outer circumference of the second hydraulic cylinder tube (28) and is spaced apart from the other sliding element (32) in an axial direction.

10. Push-off trailer (10) having a push-off device (12) according to any of the preceding claims.

## Revendications

1. Dispositif de poussée (12), en particulier pour un produit agricole à transporter, comprenant un espace de chargement (36) qui présente un fond de chargement (18), deux parois latérales (38) contiguës latéralement à celui-ci et une paroi de poussée (14), qui est déplaçable dans le sens longitudinal (x) de l'espace de chargement (36) par rapport à un fond coulissant (16) qui est déplaçable de son côté dans le sens longitudinal (x) de l'espace de chargement (36) par rapport au fond de chargement (18) de l'espace de chargement (36) ;
dans lequel
- le dispositif de poussée (12) présente un premier agencement de vérin hydraulique (20) qui comporte au moins un premier piston de vérin hydraulique (24) mobile dans un premier tube de vérin hydraulique (22) ;
- le dispositif de poussée (12) présente un second agencement de vérin hydraulique (26) qui comporte au moins un second piston de vérin hydraulique (30) mobile dans un second tube de vérin hydraulique (28) ;
**caractérisé en ce que**
- la paroi de poussée (14) est logée dans le sens longitudinal (x) de l'espace de chargement (36) de manière déplaçable au niveau du second tube de vérin hydraulique (28) et est déplaçable au moyen du premier agencement de vérin hydraulique (20) par rapport au fond coulissant (16) qui est déplaçable au moyen du second agencement de vérin hydraulique (26) par rapport au fond de chargement (18) de l'espace de chargement (36).

2. Dispositif de poussée (12) selon la revendication 1,
**caractérisé en ce que**
le premier tube de vérin hydraulique (22) est fixé au second tube de vérin hydraulique (28) et le premier piston de vérin hydraulique (24) est fixé à la paroi de poussée (14).

3. Dispositif de poussée (12) selon la revendication 1 ou 2,
**caractérisé en ce que**
le second piston de vérin hydraulique (30) est fixé au fond de chargement (18) de l'espace de chargement (36) et le second tube de vérin hydraulique (28) est fixé au fond coulissant (16).

4. Dispositif de poussée (12) selon la revendication 3,
**caractérisé en ce que**
un élément de palier (54) s'étendant dans le sens radial est monté côté avant à une extrémité fermée du second tube de vérin hydraulique (28), par l'intermédiaire duquel le second tube de vérin hydraulique (28) est fixé au fond coulissant (16).

5. Dispositif de poussée (12) selon la revendication 3 ou 4,
**caractérisé en ce que**
un élément de palier (52) s'étendant dans le sens radial est monté côté avant à une extrémité libre du second piston de vérin hydraulique (30), par l'intermédiaire duquel le second piston de vérin hydraulique (30) est fixé au fond de chargement (18) de l'espace de chargement (36).

6. Dispositif de poussée (12) selon l'une des revendications précédentes,
**caractérisé en ce que**
le premier piston de vérin hydraulique (24) et le second piston de vérin hydraulique (30) sont agencés de manière télescopique en sens inverse l'un par rapport à l'autre.

7. Dispositif de poussée (12) selon l'une des revendications précédentes,
**caractérisé en ce que**
le premier tube de vérin hydraulique (22) et le second tube de vérin hydraulique (28) sont fixés l'un à l'autre aux extrémités longitudinales (46, 48) respectives, au niveau desquelles les pistons de vérin hydraulique (24, 30) respectifs sont télescopiques.

8. Dispositif de poussée (12) selon l'une des revendications précédentes,
**caractérisé en ce que**
la paroi de poussée (14) est logée au moyen d'au moins un élément glissant (32) qui entoure le second tube de vérin hydraulique (28) au moins partiellement côté périphérie extérieure, au niveau du second tube de vérin hydraulique (28).

9. Dispositif de poussée (12) selon la revendication 8,
**caractérisé en ce que**
la paroi de poussée (14) est logée au moyen d'un autre élément glissant (34) qui entoure au moins partiellement côté périphérie extérieure le second tube de vérin hydraulique (28) et est espacé de l'autre élément glissant (32) dans le sens axial, au niveau du second tube de vérin hydraulique (28).

10. Véhicule de poussée (10) avec un dispositif de poussée (12) selon l'une des revendications précédentes.
